Europäisches Patentamt

European Patent Office

Office européen des brevets

(11) Veröffentlichungsnummer: **0 377 141**
**A2**

## (12) EUROPÄISCHE PATENTANMELDUNG

(21) Anmeldenummer: **89122980.9**

(22) Anmeldetag: **13.12.89**

(51) Int. Cl.⁵: **F16L 55/12, G01M 3/28**

(30) Priorität: **02.01.89 DE 3900025**

(43) Veröffentlichungstag der Anmeldung:
**11.07.90 Patentblatt 90/28**

(84) Benannte Vertragsstaaten:
**DE FR GB IT**

(71) Anmelder: **Kempken, Günter**
**Maienstrasse 1**
**D-5210 Troisdorf(DE)**

Anmelder: **Kempken, Werner**
**Güldenbergstrasse 2**
**D-5210 Troisdorf(DE)**

(72) Erfinder: **Kempken, Günter**
**Maienstrasse 1**
**D-5210 Troisdorf(DE)**
Erfinder: **Kempken, Werner**
**Güldenbergstrasse 2**
**D-5210 Troisdorf(DE)**

(74) Vertreter: **Fischer, Friedrich B., Dr.-Ing.**
**Saarstrasse 71**
**D-5000 Köln 50 (Rodenkirchen)(DE)**

(54) **Rohrprüf- und -absperrgerät.**

(57) Ein Rohrprüf- und -absperrgerät mit einem festen rohrzylindrischen Innenteil und zwei in achsialer Richtung im Abstand voneinander angeordneten ringförmigen Druckkammern, deren Außenflächen bei Druckbeaufschlagung an einem zu prüfenden oder abzusperrenden Rohr anliegen können, wird dadurch verbessert, daß die beiden Druckkammern an der Innenseite durch wenigstens eine in Achsrichtung im wesentlichen zugfeste Lage miteinander verbunden sind und in Achsrichtung derart frei bewegbar sind, daß sich ihre inneren Seitenwandungen bei Erhöhung der Druckbeaufschlagung einander nähern.

FIG.1

## Rohrprüf- und -absperrgerät

Die Erfindung bezieht sich auf ein Rohrprüf- und -absperrgerät mit einem festen rohrzylindrischen Innenteil und zwei in achsialer Richtung im Abstand voneinander angeordneten ringförmigen Druckkammern, deren radiale Außenflächen bei Druckbeaufschlagung an einem zu prüfenden oder abzusperrenden Rohr anliegen können.

Rohrprüf- und -absperrgeräte dieser Art werden für vielfältige Zwecke benutzt, insbesondere für abschnittsweise Dichtheitsprüfungen von Muffendichtungen, da bei neu verlegten Rohrleitungen die Dichtheit der gelieferten Rohre bereits vom Hersteller geprüft wurde, so daß vielfach nur noch bei den Muffendichtungen Undichtigkeiten auftreten.

Weitere Anwendungsmöglichkeiten sind Dichtheitsprüfungen vollständiger Rohrleitungen und Schächte, und im Katastropheneinsatz das kurzfristige vollständige Absperren von Entwässerungsleitungen und -schächten. Allgemein kommt auch das Absperren von Rohren bei Kanalreinigungsarbeiten, bei Kanal-Videountersuchungen, bei Rohr- und Schachtsanierungen, bei Kanalbelüftungen und Entgasungen, bei Kontrollen und Begehungen und beim Bau von Rohrleitungen in Betracht.

Ein Gerät der vorstehend beschriebenen Art enthält zwei durch einen Metallzylinder verbundene, in Achsrichtung im Abstand voneinander gehaltene Umfangsrinnen, in denen sich mit Druck beaufschlagbare schlauchförmige Druckkörper befinden. Geräte dieser Art erfordern in jedem Anwendungsfall, daß bei der Prüfung von Rohrundichtigkeiten durch Druckzufuhr von außen ein Fluiddruck in dem Raum zwischen den beiden schlauchförmigen Druckkörpern aufgebaut werden muß, so daß Zeitverluste eintreten und zusätzliche Ausrüstung erforderlich ist. Auch ist das Gerät nur mit geringer Toleranz einem vorgegebenen Durchmesser des zu prüfenden und/oder abzusperrenden Rohres zugeordnet, so daß mehrere Geräte mit verschiedenen Durchmessern bereitgehalten werden müssen. Dabei ist die Möglichkeit der Anpassung an Toleranzen des Durchmessers und der Rundheit des zu prüfenden und/oder abzusperrenden Rohres gering.

Diese Nachteile ließen sich teilweise dadurch beheben, daß zwei einzelne Sperrkörper, die größeren Durchmessertoleranzen anpaßbar sind, in Achsrichtung miteinander verbunden werden, z.B. durch ein Seil oder eine Kette. Dies bedingt jedoch einen hohen Flächendruck abhängig von dem Durchmesser des Rohres, so daß bei großen Durchmessern erhebliche Zugkräfte auftreten, die zum Bruch oder zur Dehnung der Zugverbindung führen können. Auch besteht der Nachteil, daß die beiden Sperrkörper separat unter Fluiddruck gesetzt werden oder aber durch einen Schlauch miteinander verbunden werden müssen, so daß weitere Komplikationen eintreten.

Die Erfindung bezweckt, ein Rohrprüf- und -absperrgerät zu schaffen, bei dem die beschriebenen Nachteile nicht auftreten, und das insbesondere bei wirtschaftlichem Einsatz eine hohe Betriebssicherheit gewährleistet und einem weiten Bereich von Rohrdurchmessern angepaßt werden kann.

Gemäß der Erfindung ist ein Rohrprüf- und -absperrgerät der eingangs bezeichneten Art vorgesehen, bei dem die beiden Druckkammern an der Innenseite durch wenigstens eine in Achsrichtung im wesentlichen zugfeste Lage miteinander verbunden sind und in Achsrichtung derart frei bewegbar sind, daß sich ihre inneren Seitenwandungen bei Erhöhung der Druckbeaufschlagung einander nähern.

Gemäß einer bevorzugten Ausführungsform ist vorgesehen, daß die im wesenlichen zugfeste Lage aus gummiertem Cordgewebe besteht, deren Kettfäden in Achsrichtung angeordnet sind.

Ein weiteres wesentliches Merkmal ist, daß sich die Mitten der nach innen gerichteten Flächen der ringförmigen Druckkammern über den Enden der im wesentlichen zugfesten Lage befinden.

Ein weiteres bevorzugtes Merkmal ist, daß sich über der im wesentlichen zugfesten Lage eine weitere, an den inneren Seitenwandungen der Druckkammern anliegende Lage aus gummiertem Cordgewebe befindet, deren Kettfäden in Achsrichtung angeordnet sind.

Auch werden Vorteile erreicht, wenn sich auf der in Achsrichtung im wesentlichen zugfesten weiteren Lage eine Querlage befindet, deren Kettfäden in Umfangsrichtung verlaufen, derart, daß radial nach außen wirkende Kräfte aufgenommen werden können.

Eine weitere bevorzugte Ausführungsform besteht darin, daß die Kettfäden der Druckkammern in Umfangsrichtung verlaufen, so daß ihre Seitenteile bei Druckerhöhung sich seitlich ausdehnen können.

Wenn höhere Drücke von den Druckkammern aufgenommen werden müssen, können diese mehrlagig aufgebaut werden, wobei die Kettfäden der einzelnen Lagen abwechselnd spitze Winkel miteinander bilden.

Auch ist es vorteilhaft, daß die beiden Druckkammern in dem sie verbindenden Teil eine oder mehrere Durchgangsöffnungen haben.

Die Erfindung wird nachfolgend anhand der Zeichnungen näher beschrieben.

Fig. 1 zeigt ein Ausführungsbeispiel eines Rohrprüf- und -absperrgeräts im Längsschnitt in Betriebslage.

Fig. 2 zeigt den Gegenstand der Fig. 1 bei Druckentlastung.

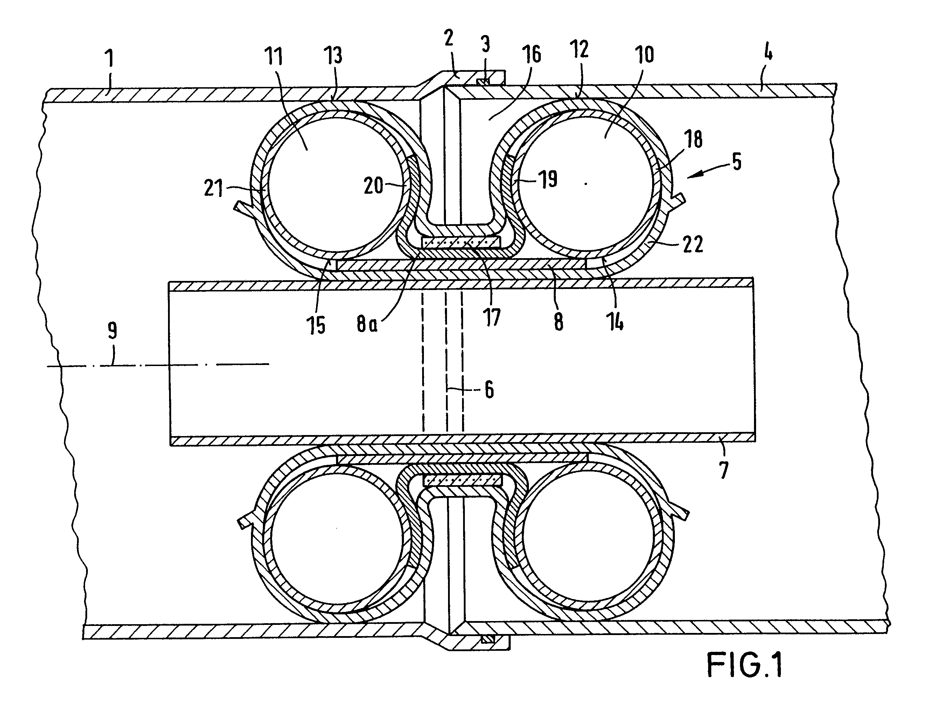

Das in Fig. 1 dargestellte Ausführungsbeispiel zeigt ein Außenrohr 1, dessen Muffenverbindung 2 über eine Dichtung 3 gegenüber dem nächsten Außenrohr 4 abgedichtet ist. Es sei die Aufgabe gestellt, die Muffenverbindung 2 auf Dichtheit zu prüfen.

Zu diesem Zweck wird das Rohrprüf- und -absperrgerät 5 gemäß der Erfindung an der Verbindungsstelle 6 der beiden Außenrohre 1 und 4 angeordnet. Das Gerät 5 enthält einen Innenzylinder 7 aus Metall oder Kunststoff, der im wesentlichen formstabil ist. Auf dem Innenzylinder 7 befindet sich eine zylindrische Lage 8 aus gummiertem Cordgewebe, welche als Festigkeitsträger dient und so gelegt ist, daß die Kette des Gewebes in Richtung der Rohrachse 9 liegt. Die Schußfäden sind entweder dünn und elastisch oder nicht vorhanden. Durch die achsparallele Lage der Kettfäden ist eine hohe Zugfestigkeit der Lage 8 in Richtung der Achse 9 gewährleistet.

Auf dem Innenzylinder 7 befinden sich ringförmige Druckkammern 10 und 11, deren radiale Außenflächen 12 und 13 an den Innenflächen der Rohre 1 und 4 dichtend anliegen, wenn sie mit Druck beaufschlagt werden. Die Druckkammern 10 und 11 sind so ausgebildet und angeordnet, daß ihre radial nach innen gerichteten Flächen 14 und 15 etwa symmetrisch zu den Enden der Lage 8 angeordnet sind, so daß diese Flächen 14 und 15 etwa je zur Hälfte auf der Lage 8 aufliegen.

Über der Lage 8 befindet sich eine weitere Lage 8a aus gummiertem Cordgewebe, die an den inneren Seitenwandungen 19 und 20 der Druckkammern 10 und 11 anliegt, und deren Kettfäden in Achsrichtung 9 angeordnet sind.

Als Sicherung gegen radial nach außem gerichtete Kräfte ist um die Lage 8a eine Querlage 17 gelegt, deren Kettfäden in Umfangstung verlaufen, so daß radial nach außen gerichtete Kräfte aufgenommen werden können. Um die so gebildete Anordnung ist eine äußere Schicht 22 gelegt.

Da die Kettfäden des Cordmaterials der Druckkammern 10 und 11 auf zu der Achse 9 konzentrischen Kreisen liegen, ist bei Druckerhöhung eine kräftige Wölbung der Seitenteile 18, 19, 20 und 21 möglich. Dies hat die erwünschte Folge, daß das Volumen des Raumes 16 bei Erhöhung der Druckbeaufschlagung wesentlich verringert wird, so daß der Druck des im Raum 16 eingeschlossenen Mediums erhöht ist. Es ist dadurch in vielen Fällen möglich, z.B. bei der Prüfung der Dichtheit einer Muffenverbindung auf den Aufbau eines Druckes in dem Raum 16, z.B. durch Druckpumpen oder Druckbehälter, zu verzichten.

Wie bereits erwähnt, können die Druckkammern mehrlagig aufgebaut werden, wenn von ihnen höhere Drücke aufzunehmen sind. Die Kettfäden der einzelnen Lagen können dabei abwechselnd spitze Winkel zur Querachse bzw. miteinander bilden.

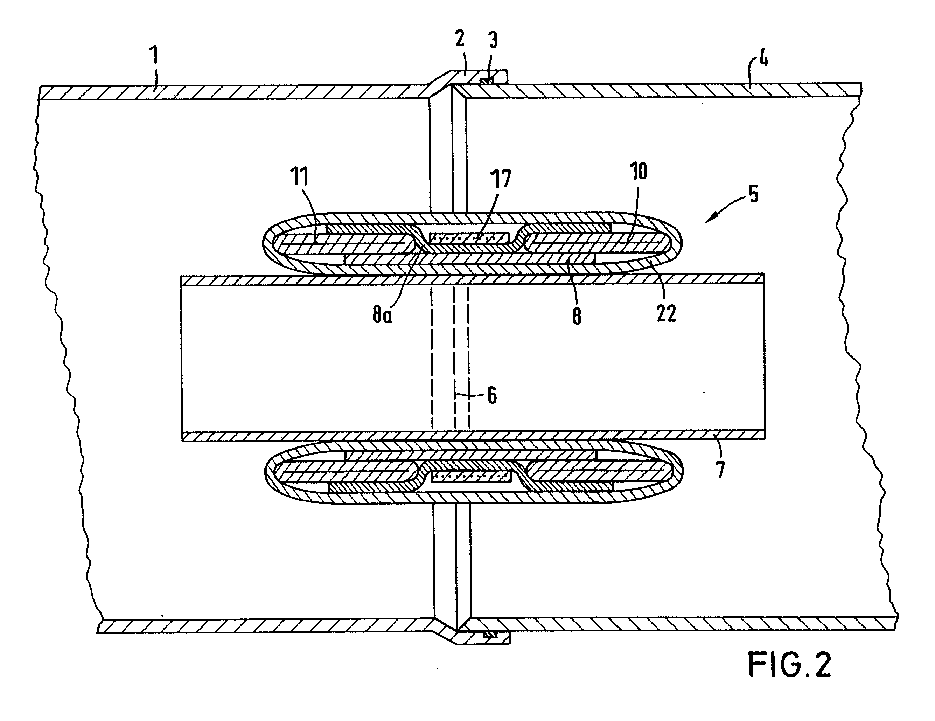

Fig. 2 zeigt die in Fig. 1 dargestellte Ausführungsform bei Druckentlastung. Das Gerät 5 hat dann ein wesentlich kleineres Volumen als bei Druckbeaufschlagung im Betrieb.

Der besondere Vorteil des beschriebenen Rohrprüf- und -absperrgerätes liegt vor allem darin, daß es den vielfältigsten Anwendungsmöglichkeiten angepaßt werden kann. So können auch solche Rohre, die hinsichtlich der Abmessungen und der Exaktheit der Kreisform ihres Innendurchmessers gewisse Toleranzen aufweisen, zuverlässig abgedichtet werden. Auch ist durch die Bauart der vorteil gegeben, daß in bestimmten Fällen die Bereitstellung besonderer Druckquellen für den von den Druckkammern eingeschlossenen Raum entfallen kann.

Die beiden Druckkammern können separat oder gemeinsam mit Druck beaufschlagt werden. Bei gemeinsamer Beaufschlagung kann es vorteilhaft sein, die beiden Druckkammern ständig oder absperrbar miteinander zu verbinden, z.B. durch eine Verbindung in dem die beiden Druckkammern verbindenden Teil.

Das Gerät kann in vorteilhafter Weise weiteren betrieblichen Erfordernissen angepaßt werden. So können im Innenzylinder Anschlüsse, Ventile usw. für Druckluft, Druckwasser usw. zu den Druckkammern 10 und 11 sowie für den von ihnen eingeschlossenen Raum 16 vorhanden sein.

Weitere Anwendungsmöglichkeiten ergeben sich, wenn der freie Durchfluß durch den Innenzylinder 7 ganz oder teilweise geschlossen wird. Das Gerät kann dann wie ein Gerät mit nur einer Druckkammer.zur Abdichtung, zum Umleitung, zum Prüfen und zum Absperren von Rohrleitungen verwendet werden.

## Ansprüche

1. Rohrprüf- und -absperrgerät mit einem festen rohrzylindrischen Innenteil und zwei in achsialer Richtung im Abstand voneinander angeordneten ringförmigen Druckkammern, deren radiale Außenflächen bei Druckbeaufschlagung an einem zu prüfenden oder abzusperrenden Rohr anliegen können, dadurch gekennzeichnet, daß die beiden Druckkammern (10, 11) an der Innenseite durch wenigstens eine in Achsrichtung (9) im wesentlichen zugfeste Lage (8) miteinander verbunden sind und in Achsrichtung (9) derart frei bewegbar sind, daß sich ihre inneren Seitenwandungen (19, 20) bei Erhöhung der Druckbeaufschlagung einander nähern.

2. Rohrprüf- und -absperrgerät nach Anspruch 1, dadurch gekennzeichnet, daß die im wesentlichen zugfeste Lage (8) aus gummiertem Cordgewebe besteht, deren Kettfäden in Achsrichtung (9) angeordnet sind.

3. Rohrprüf- und -absperrgerät nach Anspruch 1 oder 2, dadurch gekennzeichnet, daß sich die Mitten der nach innen gerichteten Flächen der ringförmigen Druckkammern (10, 11) über den Enden der im wesentlichen zugfesten Lage (8) befinden.

4. Rohrprüf- und -absperrgerät nach einem der Ansprüche 1-3, dadurch gekennzeichnet, daß sich über der im wesentlichen zugfesten Lage (8) eine weitere, an den inneren Seitenwandungen (19, 20) der Druckkammern (10, 11) anliegende Lage (8a) aus gummiertem Cordgewebe befindet, deren Kettfäden in Achsrichtung (9) angeordnet sind.

5. Rohrprüf- und -absperrgerät nach Anspruch 4, dadurch gekennzeichnet, daß sich auf der in Achsrichtung (9) im wesentlichen zugfesten weiteren Lage (8a) eine Querlage (17) befindet, deren Kettfäden in Umfangsrichtung verlaufen, so daß radial nach außen wirkende Kräfte aufgenommen werden können.

6. Rohrprüf- und -absperrgerät nach einem der Ansprüche 1-5, dadurch gekennzeichnet, daß die Kettfäden der Druckkammern (10, 11) in Umfangsrichtung verlaufen, so daß ihre Seitenteile (18, 19, 20, 21) bei Druckerhöhung sich seitlich ausdehnen können.

7. Rohrprüf- und -absperrgerät nach einem der Ansprüche 1-6, dadurch gekennzeichnet, daß die Druckkammern (10, 11) aus mehreren Lagen aus gummiertem Cordgewebe bestehen, deren Kettfäden abwechselnd spitze Winkel miteinander bilden.

8. Rohrprüf- und -absperrgerät nach einem der Ansprüche 1-7, dadurch gekennzeichnet, daß die Druckkammern (10, 11) in dem sie verbindenden Teil (8, 8a) eine oder mehrere Durchgangsöffnungen aufweisen.

FIG.1

EP 0 377 141 A2

K 53815

FIG.2